# EUROPEAN PATENT SPECIFICATION

(11) **EP 1 780 526 B1**
(45) Date of publication and mention of the grant of the patent: **25.06.2008**
(21) Application number: 06380211.0
(22) Date of filing: 27.07.2006
(51) Int. Cl.: G01M 9/08, G01M 9/06, G01L 19/00, G01L 15/00

(54) **A system for transmitting pressures between a detachable part and a fixed part of a scale model placed on aerodynamic tunnel**
Vorrichtung zum Übertragen des Druckes zwischen einem abnehmbaren und einem festen Teil eines Modells in einem aerodynamischen Windkanal
Dispositif pour transmettre des pressions entre une partie détachable et une partie fixe d'un modèle à échelle au tunnel aérodynamique de soufflerie

(30) Priority: 31.10.2005 ES 200502652
(43) Date of publication of application: 02.05.2007
(73) Proprietor: Airbus España, S.L., 28906 Getafe (Madrid) (ES)
(72) Inventor: Romero Checa, Eduardo, 28008 Madrid (ES); De Pablo Pérez, Jesus, 28290 Las Matas Las Rozas de Madrid (ES); Balden, Thomas, 28199 Bremen (DE)
(74) Representative: Ungria Lopez, Javier

(56) References cited:
- JP-A- 3 009 236
- JP-A- 2000 097 803
- US-A- 2 523 481
- US-A1- 2002 088 276
- US-A1- 2005 188 759

## Description

### FIELD OF THE INVENTION

This invention belongs to the technical field of systems intended for tapping and transmitting pressures between pieces of test models in a wind tunnel, for the tapping, measurement and analysis of those pressures and aerodynamic properties of elements of aircraft, cars, trains, etc. In particular, the invention applies to the sector of systems for the tapping and transmission of pressures between a fixed part and a detachable part, mobile or otherwise, of test models in a wind tunnel in the aeronautical sector.

### PRIOR ART OF THE INVENTION

In wind tunnel tests conducted in the aeronautical sector, it is very often necessary to tap pressures in the different pieces making up the models used.

To do this, in the prior art many of these pieces are designed to have pressure taps, which consist of small holes connected by means of pipes to a module where the different pressures that are gathered are measured. No kind of flow passes through these pipes; all that is present is the pressure to measure.

In the prior art, when there existed a detachable part with pressure taps forming part of a model, the way of connecting and/or disconnecting the pressures was by means of the use of connectors, such as for example pipes made of various materials, such as metal, plastic, etc.

These connection system present major drawbacks. One of them is the time needed for fitting and removing any piece of a model provided with pressure taps. Given that wind tunnels tests are very expensive to conduct, any saving in time during the assembly and dismantling of the different arrangements of the model necessary for the tests implies a reduction in costs and therefore a saving in money.

Moreover, models for testing in wind tunnels are usually small size, which very often makes it complicated or impossible to install the desired number of pressure taps, and the pipes needed for its transmission.

The system forming the object of the patent application arises out of the need to install a large number of small pressure taps, without the need to use complex connectors or pipes, and to reduce the time needed for the fitting and removing of the different pieces and the assembly and dismantling of the arrangements of the model for different wind tunnel tests.

US 2005/188759 discloses a system having a set of tapping holes, a set of internal conduits with pressure outlets, coupling means and a distributor block with a set of pressure inlets extended in ducts.

### DESCRIPTION OF THE INVENTION

The present invention has the aim of overcoming the drawbacks of the pressure connection systems of the prior art described above by means of a system for transmitting pressure without using pipes, between a detachable part and a fixed part of a model used in wind tunnel tests.

In the present invention, the detachable part of the model comprises a set of pressure tapping holes and a set of pressure outlets complementary to those pressure tapping holes, along with an array of internal conduits which link the pressure tapping holes with their respective pressure outlets.

The fixed part of the model in turn comprises an array of pressure inlets made in a distributor block provided in said fixed part, which are extended in pressure transmission ducts that can be connected to a pressure measuring module via an array of pressure transmission conduits.

The invention furthermore comprises means of coupling for coupling of the detachable part to the fixed part.

The pressure outlets of the detachable part terminate in a first contact surface provided in said detachable part, which faces a second contact surface provided in the distributor block of the fixed part, where the pressure inlets made in that distributor in turn terminate.

The coupling between the fixed part and the detachable part of the model is made via said first and second contact surfaces such that the pressure outlets of the detachable part face the pressure inlets of the distributor block of the fixed part.

A sealing joint is provided between the first contact surface and the second contact surface. This sealing joint comprises a first face confronting the first contact surface and a second face confronting the second contact surface.

So that the pressure connection can exist between the pressure outlets of the detachable part and the pressure inlets of the fixed part, the sealing joint includes a set of passage holes aligned with those pressure outlets and inlets, via which the pressure tapped in the detachable part is transmitted to the fixed part. Thanks to the sealing joint, pressure losses between the surfaces of the fixed part and the detachable part are prevented, and measurement errors that these pressure losses would originate are thus avoided.

In this way, with the present invention the system of connection by pipes is done away with, thus reducing the time needed for fitting and removing the parts of the model provided with the pressure taps and outlets. Another additional advantage of the invention is the possibility of being able to install a large number of pressure taps in a small space, something which was not possible with the traditional systems used in the state of the art, since these systems require large spaces for the taps and the connection pipe, which is not compatible with the small dimensions of test models in wind tunnels.

In one of the embodiments of the invention, in order to facilitate the join and contact between the contact surfaces of the fixed and detachable parts of the model, the first contact surface of the detachable part is located in a first depression made in that detachable part, and the second contact surface of the fixed part is located in a second ridge emerging from the outer wall of the distributor block of said fixed part. In this embodiment, the sealing joint fits into the first depression of the detachable part via its periphery.

In an alternative embodiment of the invention, in order to facilitate contact between both contact surfaces, the first contact surface of the detachable part is located in a first ridge in that detachable part, and the second contact surface of the fixed part is located in a second depression made in the outer wall of the distributor block of said fixed part. In this embodiment, the sealing joint fits into the second depression of the distributor block of the fixed part via its periphery.

In an embodiment of the sealing joint, said sealing joint includes at least one centred opening through which passes at least one second centred projection which emerges from the second contact surface of the fixed part. In a preferred form of carrying out this embodiment, the second centred projection traverses the centred opening of the sealing joint and penetrates into a first recess provided in the first contact surface of the detachable part.

In an alternative embodiment of the sealing joint, said sealing joint includes at least one centred opening through which passes at least one first centred projection which emerges from the first contact surface of the detachable part. In a preferred form of carrying out this embodiment, the first centred projection traverses the centred opening of the sealing joint and penetrates into a second recess provided in the second contact surface of the fixed part.

The advantage of these embodiments of the sealing joint is the greater securing of that sealing joint between the contact surfaces of the detachable part and the fixed part, and a complete immobilisation of the latter, thereby preventing possible displacements which would give rise to the pressure tapping holes or the pressure outlets becoming covered.

In another additional embodiment of the sealing joint, it is the sealing joint itself which presents at least a third centred projection, located either in the first face confronting the first contact surface of the detachable part or the second face confronting the second contact surface of the fixed part, and even, in both faces, said third projection penetrating either into a first recess in the first contact surface of the detachable part or into a second recess in the second contact surface of the fixed part, or into both the first recesses and second recesses of the two pieces.

The advantage of these additional embodiments of the sealing joint is the greater ease of manufacture of the fixed and removable parts of the model, having to make recesses in them instead of projections as in previous embodiments, with the projections being made more simply in the sealing joint, said element having less importance in the tests than the actual fixed and moving pieces of the models.

The pressure connection system without pipes of the present invention permits pressure tappings and connections to be made in very small size pieces, in such a way that the parts that are connected can have a surface area of the order of several square millimetres. The holes can therefore be of the order of several tenths of a millimetre.

### BRIEF DESCRIPTION OF THE FIGURES

Figure 1 is a diagrammatic view in upper plan of a fixed part and a detachable part belonging to a model to which the system of the present invention is being applied;
figure 2 is an enlarged diagrammatic view corresponding to zone A marked in figure 1;
figure 3 is a diagrammatic view in transverse cross-section along the line B-B' shown in figure 1;
figure 4 is an enlarged diagrammatic view of the interior corresponding to zone C marked in figure 3;
figure 5 is a diagrammatic view in transverse cross-section along the line D-D' shown in-figure 3;
figure 6 is a diagrammatic view in front elevation of a first embodiment of the sealing ring shown in figure 3;
figure 7 is a diagrammatic view in transverse cross-section along the line E-E' shown in figure 3;
figure 8 is a diagrammatic view in front elevation of a second embodiment of the sealing ring;
figure 9 is a diagrammatic view in front elevation of a first embodiment of the contact surface of the detachable part;
figure 10 is a diagrammatic view in front elevation of a first embodiment of the contact surface of the distributor block;
figure 11 is a diagrammatic view in transverse cross-section along the line F-F' shown in figure 9;
figure 12 is a diagrammatic view in transverse cross-section along the line G-G' shown in figure 10;
figure 13 is a diagrammatic view in front elevation of a second embodiment of the contact surface of the detachable part;
figure 14 is a diagrammatic view in front elevation of a second embodiment of the contact surface of the distributor block;
figure 15 is a diagrammatic view in transverse cross-section along the line H-H' shown in figure 13;
figure 16 is a diagrammatic view in transverse cross-section along the line I-I' shown in figure 14;
figure 17 is a transverse diagrammatic view of an embodiment of the sealing joint with four third centred projections.

Appearing in these figures are numerical references denoting the following elements:
- 1: fixed part
- 2a,2b: detachable part
- 3a-3h: pressure tapping holes
- 4a-4h: internal conduits
- 5a-5h: pressure outlets
- 5i: first contact surface
- 5j: first depression
- 5k: first ridge
- 5l: first centred projection
- 5m: first recess
- 6: coupling means
- 7: distributor block
- 7a-7h: pressure inlets
- 7i: second contact surface
- 7j: second depression
- 7k: second ridge
- 7l: second centred projection
- 7m: second recess
- 8a-8h: pressure transmission ducts
- 9a-9h: pressure transmission conduits
- 10: sealing joint
- 10a-10h: passage holes
- 10i: centred opening
- 10j: third centred projection
- 11: first face of the sealing joint
- 12: second face of the sealing joint

### MODES OF EMBODIMENT OF THE INVENTION

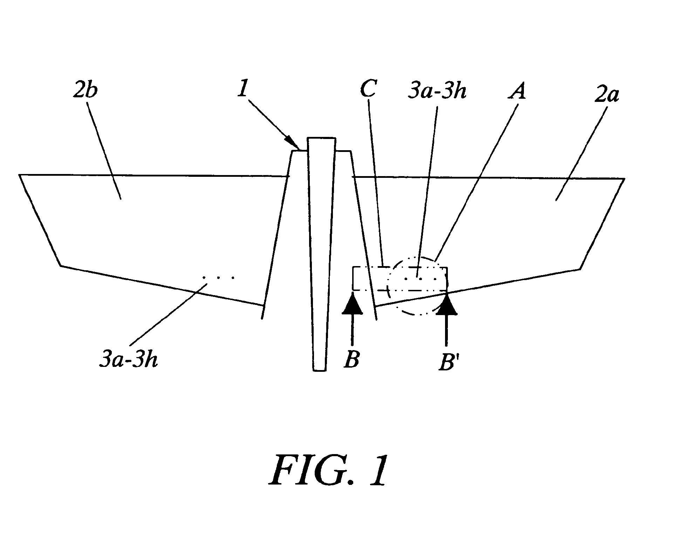

Figure 1 shows a diagrammatic view of a fixed part 1 and two detachable parts 2a,2b belonging to a model subjected to tests in a wind tunnel, to which the system for transmitting pressures of the present invention is being applied.

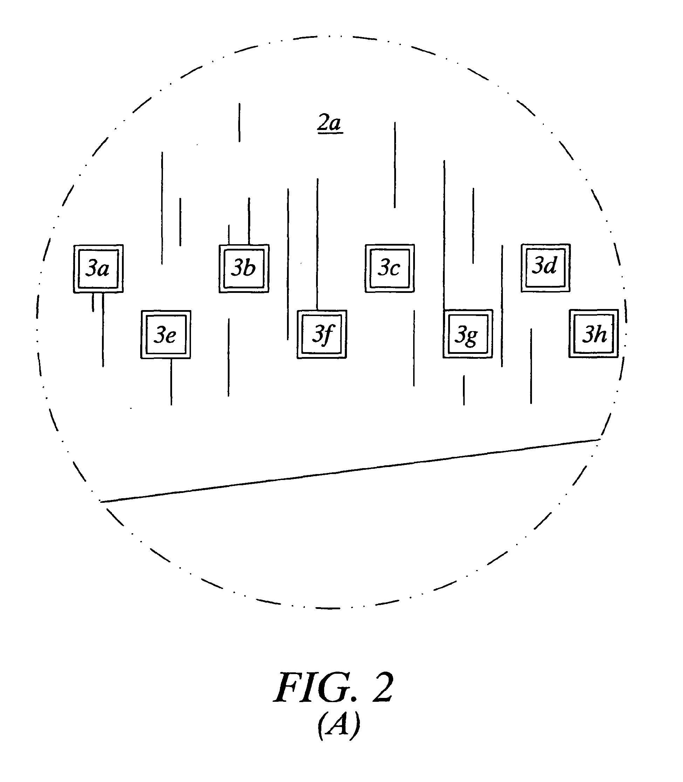

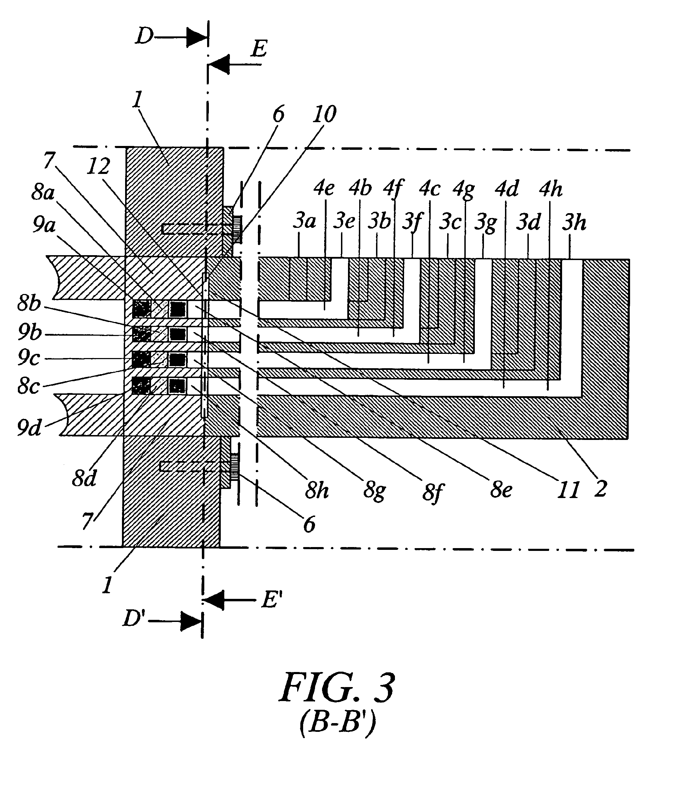

The detachable part 2a,2b of the system for transmitting pressures of the present invention comprises an array of pressure tapping holes 3a-3h. Figures 2 and 3 show those pressure tapping holes 3a-3h in detail in the detachable part 2a,2b.

As can be seen in figure 3, the detachable part 2a,2b also comprises an array of internal conduits 4a-4h via which the pressure tapping holes 3a-3h connect with respective pressure outlets 5a-5h also provided in said detachable part 2a,2b.

Said system for transmitting pressure furthermore comprises an array of pressure inlets 7a-7h made in a distributor block 7 provided in the fixed part 1. These pressure inlets are extended in pressure transmission ducts 8a-8h, which can be connected to a pressure measuring module via the pressure transmission conduits 9a-9h.

The system also includes coupling means 6, such as screws for example, in order to couple the detachable part 2a,2b to the fixed part 1, as can be seen in figure 3.

In the system for transmitting pressure forming the object of the present invention, when the detachable part 2a,2b is fitted to the fixed part 1, the pressure outlets 5a-5h of the detachable part 2a,2b terminate in a first contact surface 5i provided in said detachable part 2a,2b and facing the fixed part 1, and the pressure inlets 7a-7h made in the distributor block 7 provided in the fixed part terminate in a second contact surface 7i provided in said distributor 7, facing the first contact surface 5i of the detachable part 2a,2b.

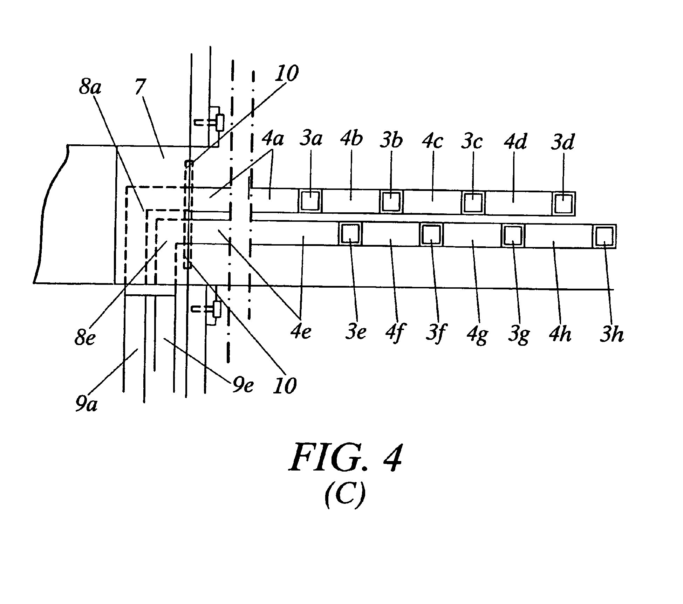

As can be seen in figures 3 and 4, the first contact surface 5i and the second contact surface 7i are facing in such a way that the pressure outlets 5a-5h of the detachable part 2a,2b are facing the pressure inlets 7a-7h of the fixed part 1. In this way, the pressure tapped in the detachable part 2a,2b via the pressure tapping holes 3a-3h are transmitted to the fixed part 1, and can be measured with a pressure measuring module connected to said fixed part 1, via the pressure transmission conduits 9a-9h.

In this way, transmission is achieved of the pressures tapped in the detachable part 2a,2b to the fixed part 1, from where they are sent to the pressure measuring module connected to the latter, without any need for the pipes or additional connections that were necessary in pressure connection systems in wind tunnel models used in the state of the art.

So, with the fixed part 1 and the detachable part 2a,2b directly facing each other, and by causing some holes made in the pieces to directly connect the pressure from one side to the other, a series of advantages is obtained with respect to the systems used in the state of the art. The first of them is that the space necessary for passing the information from the pressure tappings is reduced since the pipes used so far for transmitting the pressures are not needed. Another advantage is the reduction in time for assembling and dismantling the model for wind tunnel tests, since the connection and disconnection of pressures is achieved at the same time as the detachable part 2a,2b is fitted to or removed from the fixed part by conventional means, such as screws or nuts for example.

Figures 3 and 4 show that between the first contact surface 5i and the second contact surface 7i is a sealing joint 10 which comprises a first face of the sealing joint 11 facing said first contact surface 5i and a second face of the sealing joint 12 facing said second contact surface 7i. Said sealing joint contains an array of passage holes 10a-10h aligned with at least one of the pressure outlets 5a-5h of the detachable part 2a,2b, and with at least one of the pressure inlets 7a-7h, in such a way that pressure tapped in the pressure holes 3a-3h passes from the detachable part 2a,2b to the fixed part 1 via said passage holes 10a-10h.

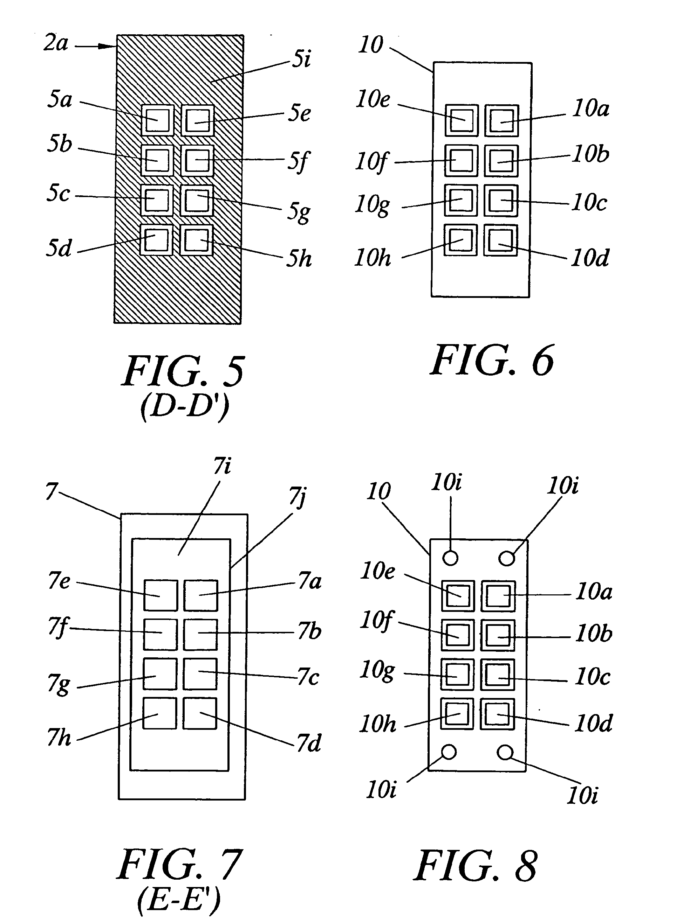

This sealing joint is made of a flexible material such as rubber or similar, thereby achieving a perfect join between the detachable part 2a,2b and the fixed part 1. Figure 6 shows an embodiment of the sealing joint 10.

The advantage of using this sealing joint 10 is to achieve a perfect join between the first contact surface 5i and the second contact surface 7i owing to the flexibility of the material used in that sealing joint 10, and also to prevent loss of the pressure transmitted between said first contact surface 5i and the second contact surface 7i owing to the tightness provided by that material.

In an embodiment of the invention, the first contact surface 5i is located on a first depression 5j in the detachable part 2a,2b and the second contact surface 7i is located on a second ridge 7k which emerges from the outer wall of the distributor block 7 of the fixed part 1. The sealing joint 10 fits under pressure into this first depression via its periphery.

The advantage of this embodiment is a better contact between the first contact surface 5i and the second contact surface 7i, along with a simple and effective form of securing the sealing joint between those surfaces 5i, 7i.

In an alternative embodiment of the invention equivalent to the above, the first contact surface 5i is located on a first ridge 5k in the detachable part 2a,2b and the second contact surface 7i is located on a second depression 7j in the outer wall of the distributor block of the fixed part 1. The sealing joint 10 fits under pressure into this second depression 7j via its periphery.

As this embodiment is equivalent to the above, it offers the same advantages of proper contact and securing of the sealing joint 10.

In an alternative embodiment of the sealing joint 10, it consists of at least one centred opening 10i which favours its securing between the first contact surface 5i and the second contact surface 7i.

In this way, in an embodiment of the invention, emerging from the second contact surface 7i is at least one second centred projection 7l which is introduced into at least one of the centred openings 10i fixing the sealing joined to the said second contact surface 7i.

In another embodiment equivalent to the above, it is from the first contact surface 5i where there emerges at least one first centred projection 5l which is introduced into at least one of the centred openings 10i fixing the sealing joint to the said first contact surface 5i.

The advantage of these embodiments with the centred openings 10i in the sealing joint and either the first centred projections 5l of the first contact surface 5i that are introduced in them, or the second centred projections 7l of the second contact surface 7i that are introduced in them, is a more secure fixing of said sealing joint 10 between the two contact surfaces 5i,7i, in addition to greater ease of fitting and removal.

In a preferred form of these last two embodiments, the sealing joint 10 presents four centred openings 10i and therefore either the first contact surface 5i presents four first centred projections 5l or the second contact surface 7i presents four second centred projections 7l for introducing into said centred openings 10i. In this way, complete stability is achieved in the fixing with the fewest number of elements.

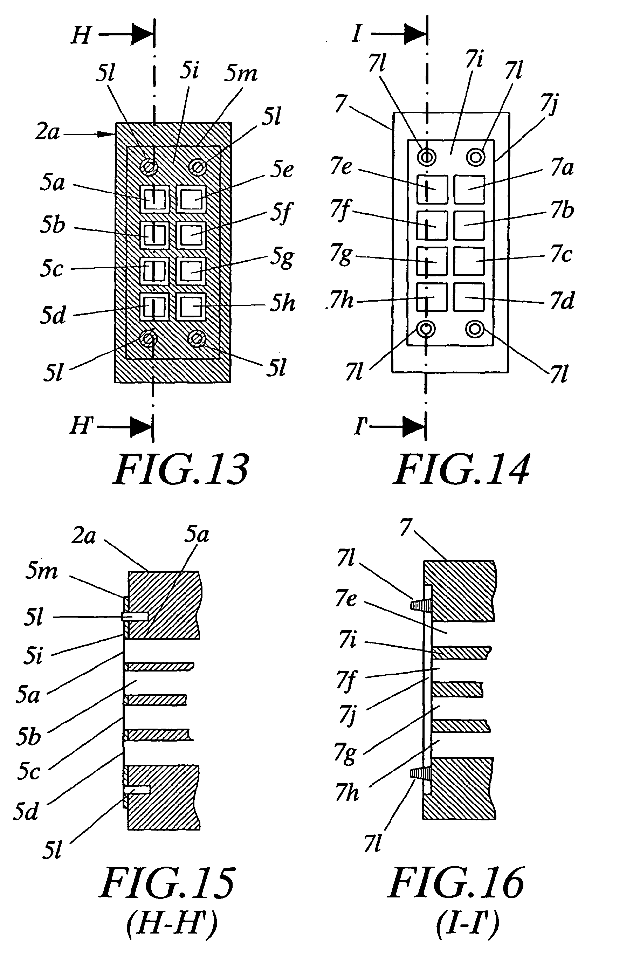

In another embodiment of the invention, as shown in figures 13-16, the second contact surface 7i presents a second centred projection 7l which traverses the centred opening 10i of the sealing joint 10 and penetrates into a complementary first recess 5m in the first contact surface 5i.

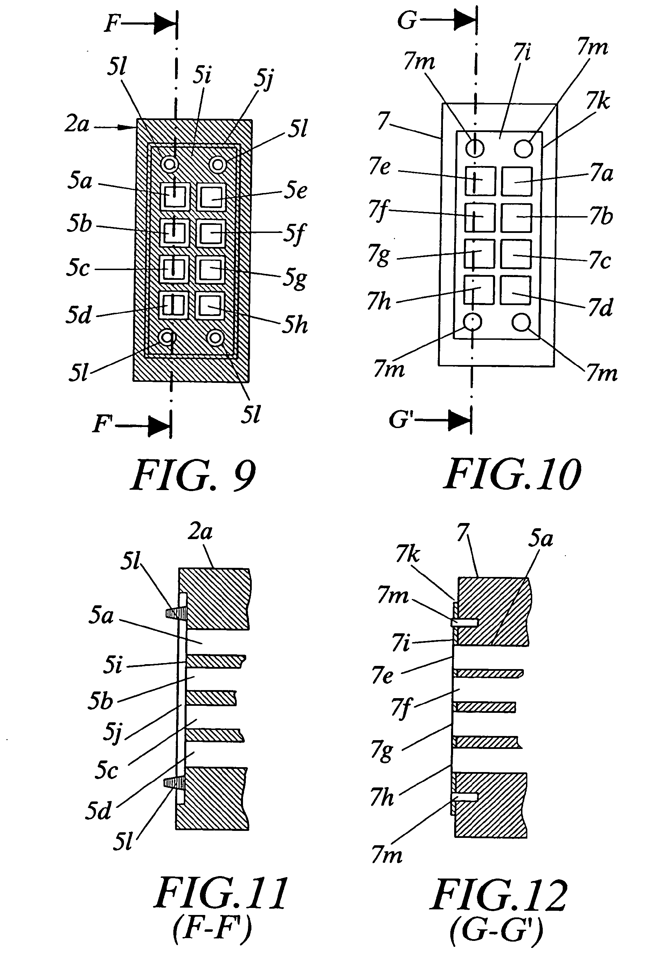

In another embodiment equivalent and symmetric to the above, as shown in figures 9-12, the first contact surface 5i presents a first centred projection 5l which traverses the centred opening 10i of the sealing joint 10 and penetrates into a complementary second recess 7m in the second contact surface 7i.

The main advantage of these embodiments is an even greater security in the sealing joint 10 since it remains fixed both to the first contact surface 5i and to the second contact surface 7i, and the three elements remain joined in a common block, this join preferably being carried out with four centred openings 10i or four second centred projections 7l and four complementary first recesses 5m or four first centred projections 5l and four complementary second recesses 7m.

There exists a different form of embodying the invention, in which it is the first face of the sealing joint 11 which comprises at least one third centred projection 10j, which penetrates into at least one complementary first recess 5m in the first contact surface 5i.

In another embodiment equivalent and symmetric to the above, it is the second face of the sealing joint 12 which comprises at least one third centred projection 10j, which penetrates into at least one complementary second recess 7m in the second contact surface 7i.

In a more complex version of these embodiments, both the first face of the sealing joint 11 and the second face of the sealing joint 12 comprise at least a third centred projection 10j each, which penetrate into at least one complementary first recess 5m in the first contact surface 5i and into at least one complementary second recess 7m in the second contact surface 7i, thereby achieving complete fixing of the sealing joint 10 to both contact surfaces, 5i,7i.

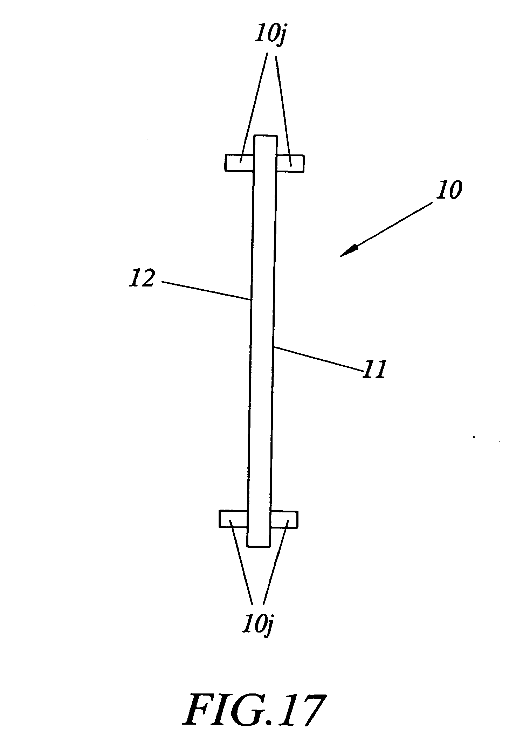

As can be seen in figure 17, in a preferred form of these last two versions, the number of third centred projections 10j in each of the faces of the sealing joint 11,12 is four, as with the number of complementary first recesses 5m in the first contact surface 5i and the number of complementary second recesses 7m in the second contact surface 7i.

The pressure connection system without pipes of the present invention permits pressure tappings and connections to be made in very small size pieces, in such a way that the parts that are connected can have a surface area of the order of several square millimetres. The holes can therefore be of the order of several tenths of a millimetre.

## Claims

1. A system for transmitting pressures between a detachable part (2a,2b) and a fixed part (1) of a scale model placed in aerodynamic tunnel, which comprises
a set of pressure tapping holes (3a-3h) made in the detachable part (2a,2b),
a set of internal conduits (4a-4h), which connect each of said pressure tapping holes (3a-3h) with respective pressure outlets (5a-5h) of the detachable part (2a,2b),
coupling means (6) for coupling the detachable part (2a,2b) to the fixed part (1),
a set of pressure inlets (7a-7h) made in a distributor block (7) provided in the fixed part (1) which are extended in pressure transmission ducts (8a-8h) which can be connected to a pressure measuring module via pressure transmission conduits (9a-9h),
**characterised in that**, when the detachable part (2a,2b) is coupled to the fixed part (1),
the pressure outlets (5a-5h) of the detachable part (2a,2b) terminate in a first contact surface (5i) arranged in said detachable part (2a,2b) and facing the fixed part (1),
the pressure inlets (7a-7h) made in the distributor block (7) provided in the fixed part (1) terminate in a second contact surface (7i) arranged in said distributor (7) and facing the first contact surface (5i) of the detachable part (2a,2b),
the pressure outlets (5a-5h) are facing the pressure inlets (7a-7h), and
provided between said contact surfaces (5i,7i) is a sealing joint (10) comprising a first face of the sealing joint (11) facing the first contact surface (5i) and a second face of the sealing joint (12) facing the second contact surface (7i), said sealing joint (10) comprising a set of passage holes (10a-10h) aligned with at least one of the pressure outlets (5a-5h) and with at least one of the pressure inlets (7a-7h), in such a way that the pressure tapped in the pressure holes (3a-3h) passes from the detachable part (2a,2b) to the fixed part (1) via said passage holes (10a-10h) in the sealing joint (10).

2. System for transmitting pressures according to claim 1, **characterised in that** the first contact surface (5i) is located on a first depression (5j) in the detachable part (2a,2b), the second contact surface (7i) is located on a second ridge (7k) which emerges from the outer wall of the distributor block (7) of the fixed part (1), and **in that** the sealing joint (10) fits into said first depression (5j) via its periphery.

3. System for transmitting pressures according to claim 1, **characterised in that** the first contact surface (5i) is located on a first ridge (5k) in the detachable part (2a,2b), the second contact surface (7i) is located on a second depression (7j) in the outer wall of the distributor block (7) and **in that** the sealing joint (10) fits into said second depression (7j) via its periphery.

4. System for transmitting pressures according to any of the above claims, **characterised in that** the sealing joint (10) comprises at least one centred opening (10i) through which passes at least one second centred projection (7I) which emerges from the second contact surface (7i).

5. System for transmitting pressures according to claim 4, **characterised in that** the second centred projection (7l) traverses the centred opening (10i) in the sealing joint (10) and penetrates into a first recess (5m) in the first contact surface (5i).

6. System for transmitting pressures according to any of claims 1, 2 or 3, **characterised in that** the sealing joint (10) comprises at least one centred opening (10i) through which passes at least one first centred projection (51) which emerges from the first contact surface (5i).

7. System for transmitting pressures according to claim 6, **characterised in that** the first centred projection (5l) traverses the centred opening (10i) in the sealing joint (10) and penetrates into a second recess (7m) in the second contact surface (7i).

8. System for transmitting pressures according to any of claims 1, 2 or 3, **characterised in that** the first face of the sealing joint (11) comprises at least one third centred projection (10j) which penetrates into at least one first recess (5m) in the first contact surface (5i).

9. System for transmitting pressures according to any of claims 1, 2 or 3, **characterised in that** the second face of the sealing joint (12) comprises at least one third centred projection (10j) which penetrates into at least one second recess (7m) in the second contact surface (7i).

10. System for transmitting pressures according to any of claims 1, 2 or 3, **characterised in that** the first face of the sealing joint (11) comprises at least one third centred projection (10j) which penetrates into at least one first recess (5m) in the first contact surface (5i), and the second face of the sealing joint (12) comprises at least one third centred projection (10j) which penetrates into at least one second recess (7m) in the second contact surface (7i).

## Patentansprüche

1. System zum Übertragen von Drücken zwischen einem abnehmbaren Teil (2a,2b) und einem festen Teil (1) eines Modells, das sich in einem aerodynamischen Windkanal befindet, enthaltend:
einen Satz Druckmesslöcher (3a-3h), die in dem abnehmbaren Teil (2a,2b) ausgebildet sind,
einen Satz innere Leitungen (4a-4h), die jedes der Druckmesslöcher (3a-3h) mit entsprechenden Druckauslässen (5a-5h) des abnehmbaren Teils (2a,2b) verbinden,
Kupplungseinrichtungen (6) zum Anschließen des abnehmbaren Teils (2a,2b) an dem festen Teil (1),
einen Satz Druckeinlässe (7a-7h), die in einem Verteilerblock (7) ausgebildet sind, der in dem festen Teil (1) vorgesehen ist, welche Druckeinlässe sich in Druckübertragungskanäle (8a-8h) erstrecken, die mit einem Druckmessmodul über Druckübertragungsleitungen (9a-9h) verbunden werden können,
**dadurch gekennzeichnet, dass** wenn der abnehmbare Teil (2a,2b) mit dem festen Teil (1) verbunden ist,
die Druckauslässe (5a-5h) des abnehmbaren Teils (2a,2b) in einer ersten Kontaktfläche (5i) enden, die in dem abnehmbaren Teil (2a,2b) angeordnet ist und dem festen Teil (1) gegenüber steht,
die Druckeinlässe (7a-7h), die in dem im festen Teil (1) vorgesehenen Verteilerblock (7) ausgebildet sind, in einer zweiten Kontaktfläche (7i) enden, die in dem Verteilerblock (7) angeordnet ist und der ersten Kontaktfläche (5i) des abnehmbaren Teils (2a,2b) gegenübersteht,
die Druckauslässe (5a-5h) den Druckeinlässen (7a-7h) gegenüberstehen, und
zwischen den Kontaktflächen (5i,7i) eine Dichtung (10) vorgesehen ist, die eine erste Dichtungsseite (11), die ersten Kontaktfläche (5i) gegenübersteht, und eine zweite Dichtungsseite (12), die der zweiten Kontaktfläche (7i) gegenübersteht, aufweist, wobei die Dichtung (10) einen Satz Durchgangslöcher (10a,10h) hat, die mit wenigstens einem der Druckauslässe (5a-5h) und wenigstens einem der Druckeinlässe (7a-7h) derart ausgerichtet sind, dass der in den Druckmesslöchem (3a-3h) gemessene Druck von dem abnehmbaren Teil (2a,2b) über die Durchgangslöcher (10a-10h) in der Dichtung (10) zum festen Teil (1) weitergeleitet wird.

2. System zum Übertragen von Drücken nach Anspruch 1, **dadurch gekennzeichnet, dass** die erste Kontaktfläche (5i) in einer ersten Vertiefung (5j) in dem abnehmbaren Teil (2a,2b) gelegen ist, die zweite Kontaktfläche (7i) auf einer zweiten Erhöhung (7k) liegt, die von der Außenwand des Verteilerblocks (7) des ersten Teils (1) ausgeht, und dass die Dichtung (10) über ihren Rand in der ersten Vertiefung (5j) sitzt.

3. System zum Übertragen von Drücken nach Anspruch 1, **dadurch gekennzeichnet, dass** die erste Kontaktfläche (5i) auf einer ersten Erhöhung (5k) im abnehmbaren Teil (2a,2b) liegt, die zweite Kontaktfläche (7i) in einer zweiten Vertiefung (7j) in der Außenwand des Verteilerblocks (7) liegt, und dass die Dichtung (10) über ihren Umfang in der zweiten Vertiefung (7j) sitzt.

4. System zum Übertragen von Drücken nach einem der obigen Ansprüche, **dadurch gekennzeichnet, dass** die Dichtung (10) wenigstens eine zentrierte Öffnung (10i) aufweist, durch die wenigstens ein zweiter zentrierter Vorsprung (7l) verläuft, der von der zweiten Kontaktfläche (7i) ausgeht.

5. System zum Übertragen von Drücken nach Anspruch 4, **dadurch gekennzeichnet, dass** der zweite zentrierte Vorsprung (71) die zentrierte Öffnung (10i) in der Dichtung (10) durchquert und in eine erste Ausnehmung (5m) in der ersten Kontaktfläche (5i) eindringt.

6. System zum Übertragen von Drücken nach einem der Ansprüche 1, 2 oder 3, **dadurch gekennzeichnet, dass** die Dichtung (10) wenigstens eine zentrierte Öffnung (10i) aufweist, durch die wenigstens ein erster zentrierter Vorsprung (5I) verläuft, der von der ersten Kontaktfläche (5i) ausgeht.

7. System zum Übertragen von Drücken nach Anspruch 6, **dadurch gekennzeichnet, dass** der erste zentrierte Vorsprung (5l) die zentrierte Öffnung (10i) in der Dichtung (10) durchquert und in eine zweite Ausnehmung (7m) in der zweiten Kontaktfläche (7i) eindringt.

8. System zum Übertragen von Drücken nach einem der Ansprüche 1, 2 oder 3, **dadurch gekennzeichnet, dass** die erste Dichtungsseite (11) wenigstens einen dritten zentrierten Vorsprung (10j) aufweist, der in wenigstens eine erste Ausnehmung (5m) in der ersten Kontaktfläche (5i) eindringt.

9. System zum Übertragen von Drücken nach einem der Ansprüche 1, 2 oder 3, **dadurch gekennzeichnet, dass** die zweite Dichtungsfläche (12) wenigstens einen dritten zentrierten Vorsprung (10j) aufweist, der in wenigstens eine zweite Ausnehmung (7m) in der zweiten Kontaktfläche (7i) eindringt.

10. System zum Übertragen von Drücken nach einem der Ansprüche 1, 2 oder 3, **dadurch gekennzeichnet, dass** die erste Dichtungsseite (11) wenigstens einen dritten zentrierten Vorsprung (10j) aufweist, der in wenigstens eine erste Ausnehmung (5m) in der ersten Kontaktfläche (5i) eindringt, und die zweite Dichtungsseite (12) wenigstens einen dritten zentrierten Vorsprung (10j) aufweist, der in wenigstens eine zweite Ausnehmung (7m) in der zweiten Kontaktfläche (7i) eindringt.

## Revendications

1. Système de transmission de pression entre une partie détachable (2a, 2b) et une partie fixe (1) d'une maquette à l'échelle placée dans un tunnel aérodynamique, qui comprend
une série de trous d'entrée de pression (3a-3h) faits dans la partie détachable (2a, 2b),
une série de conduits intérieurs (4a-4h), qui relient chacun desdits trous d'entrée de pression (3a-3h) avec des sorties de pression (5a-5h) respectives de la partie détachable (2a, 2b),
des moyens de couplage (6) pour coupler la partie détachable (2a, 2b) à la partie fixe (1),
une série d'entrées de pression (7a-7h) faites dans un bloc distributeur (7) placé dans la partie fixe (1) qui s'étendent dans des canaux de transmission de pression (8a-8h) qui peuvent être connectés à un module de mesure de pression via des conduits de transmission de pression (9a-9h),
**caractérisé en ce que**, quand la partie détachable (2a, 2b) est couplée à la partie fixe (1),
les sorties de pression (5a-5h) de la partie détachable (2a, 2b) se terminent dans une première surface de contact (5i) agencée dans ladite partie détachable (2a, 2b) et dirigée vers la partie fixe (1),
les entrées de pression (7a-7h) faites dans le bloc distributeur (7) placé dans la partie fixe (1) se terminent dans une seconde surface de contact (7i) agencée dans ledit bloc distributeur (7) et dirigée vers la première surface de contact (5i) de la partie détachable (2a, 2b),
les sorties de pression (5a-5h) sont dirigées vers les entrées de pression (7a-7h), et
placé entre lesdites surfaces de contact (5i, 7i) est un joint d'étanchéité (10) comprenant une première face du joint d'étanchéité (11) dirigée vers la première surface de contact (5i) et une seconde face du joint d'étanchéité (12) dirigée vers la seconde surface de contact (7i), ledit joint d'étanchéité (10) comprenant une série de trous de passages (10a-10h) alignés avec au moins l'une des sorties de pression (5a-5h) et avec au moins l'une des entrées de pression (7a-7h), de telle manière que la pression entrée dans les trous de pression (3a-3h) passe de la partie détachable (2a, 2b) à la partie fixe (1) via lesdits trous de passages (10a-10h) dans le joint d'étanchéité (10).

2. Système pour transmettre des pressions selon la revendication 1, **caractérisé en ce que** la première surface de contact (5i) est située sur une première dépression (5j) dans la partie détachable (2a, 2b), la seconde surface de contact (7i) est située sur un second rebord (7k) qui émerge de la paroi extérieure du bloc distributeur (7) de la partie fixe (1), et **en ce que** le joint d'étanchéité (10) est monté dans ladite première dépression (5j) via sa périphérie.

3. Système pour transmettre des pressions selon la revendication 1, **caractérisé en ce que** la première surface de contact (5i) est située sur un premier rebord (5k) dans la partie détachable (2a, 2b), la seconde surface de contact (7i) est située sur une seconde dépression (7j) dans la paroi extérieure du bloc distributeur (7) et **en ce que** le joint d'étanchéité (10) est monté dans la seconde dépression (7j) via sa périphérie.

4. Système pour transmettre des pressions selon l'une quelconque des revendications précédentes, **caractérisé en ce que** le joint d'étanchéité (10) comprend au moins une ouverture centrée (10i) à travers laquelle passe au moins une seconde saillie centrée (7I) qui émerge de la seconde surface de contact (7i).

5. Système pour transmettre des pressions selon la revendication 4, **caractérisé en ce que** la seconde saillie centrée (71) traverse l'ouverture centrée (10i) dans le joint d'étanchéité (10) et pénètre dans un premier évidement (5m) dans la première surface de contact (5i).

6. Système pour transmettre des pressions selon l'une quelconque des revendications 1, 2 ou 3, **caractérisé en ce que** le joint d'étanchéité (10) comprend au moins une ouverture centrée (10i) à travers laquelle passe au moins une première saillie centrée (5I) qui émerge de la première surface de contact (5i).

7. Système pour transmettre des pressions selon la revendication 6, **caractérisé en ce que** la première saillie centrée (5l) traverse l'ouverture centrée (10i) dans le joint d'étanchéité (10) et pénètre dans un second évidement (7m) dans la seconde surface de contact (7i).

8. Système pour transmettre des pressions selon l'une quelconque des revendications 1, 2 ou 3, **caractérisé en ce que** la première face du joint d'étanchéité (11) comprend au moins une troisième saillie centrée (10j) qui pénètre dans au moins un premier évidement (5m) dans la première surface de contact (5i).

9. Système pour transmettre des pressions selon l'une quelconque des revendications 1, 2 ou 3, **caractérisé en ce que** la seconde face du joint d'étanchéité (12) comprend au moins une troisième saillie centrée (10j) qui pénètre dans au moins un second évidement (7m) dans la seconde surface de contact (7i).

10. Système pour transmettre des pressions selon l'une quelconque des revendications 1, 2 ou 3, **caractérisé en ce que** la première face du joint d'étanchéité (11) comprend au moins une troisième saillie centrée (10j) qui pénètre dans au moins un premier évidement (5m) dans la première surface de contact (5i), et la seconde face du joint d'étanchéité (12) comprend au moins une troisième saillie centrée (10j) qui pénètre dans au moins un second évidement (7m) dans la seconde surface de contact (7i).
